# EUROPÄISCHE PATENTANMELDUNG

(11) **EP 2 287 203 A1**
(43) Veröffentlichungstag der Anmeldung: **23.02.2011**
(21) Anmeldenummer: 10165706.2
(22) Anmeldetag: 11.06.2010
(51) Int. Cl.: C08B 3/06, C08H 8/00

(54) **Verfahren zur Acetylierung von Lignocellulosen, Hemicellulosen, Cellulosen mit Keten**

(30) Priorität: 10.07.2009 DE 102009027635
(71) Anmelder: Wacker Chemie AG, 81737 München (DE)
(72) Erfinder: Petersen, Hermann, 84489, Burghausen (DE); Fleischmann, Gerald, 84489, Burghausen (DE)
(74) Vertreter: Budczinski, Angelika

(57) **Zusammenfassung**

Die Erfindung betrifft ein Verfahren zur Acetylierung von Cellulosen, Ligno- und Hemicellulosen wie Holz, Stroh und Baumwolle, sowie aus Naturprodukten hergestellte Regeneratcellulosen, mittels Keten.

## Beschreibung

Die Erfindung betrifft ein Verfahren zur Acetylierung von Cellulosen, Ligno- und Hemicellulosen wie Holz, Stroh und Baumwolle mittels Keten.

Acetylierte Ligno-, Hemicellulosen und Cellulosen wie Holz, Stroh und Baumwolle besitzen wertvolle Eigenschaften wie beispielsweise Witterungsbeständigkeit, Beständigkeit gegen Mikroorganismen wie Faul- und Schimmelpilze und Bakterien sowie hohe Dimensionsstabilität im Vergleich zu den nicht acetylierten Naturprodukten. Ebenso sind acetylierte Cellulosen (z.B. Kunstseide) wertvolle Kunststoffe, die verglichen zu Cellulose u.a. wasserabweisende Eigenschaften und Beständigkeit gegen mikrobiellen Angriff aufweisen.

Vermischt mit thermoplastischen Kunststoffen, Duroplasten und Elastomeren können diese acetylierten Produkte zu Verbundwerkstoffen weiter verarbeitet werden. Sie stellen dabei kostengünstige Alternativen zu Kunststoffen dar und basieren auf nachwachsenden Rohstoffen. Durch eine Zugabe von Adhesiven können daraus beispielsweise auch Spanplatten sowie MDF-Platten hergestellt werden. Außerdem eignen sie sich als Füll- und Verstärkungsstoffe in Kombination mit weiteren organischen und anorganischen Materialien. Die deutlich bessere Verträglichkeit der erwähnten acetylierten Produkte mit Kunststoffen hat zahlreiche Vorteile wie beispielsweise eine verbesserte mechanische Festigkeit oder eine verminderte Wasseraufnahme. Zudem kann auf die sonst üblichen Haftvermittler verzichtet werden. Fasern aus Cellulosen, Hemicellulosen oder Regeneratcellulosen zeigen nach einer Oberflächenacetylierung einen wasserabweisenden Effekt, bei sonst fast unveränderten Fasereigenschaften.

Allgemein ist die Acetylierung von Festholz, Holzspänen oder Sägemehl mittels Acetylierungsmitteln wie Essigsäureanhydrid und Isopropenylacetat seit längerem bekannt. Ebenfalls sind Acetylierungen von Stroh und Baumwolle im Stand der Technik beschrieben.

Bei der technischen Acetylierung von Lignocellulosen, Hemicellulosen, Cellulosen hat sich Essigsäureanhydrid als Acetylierungsreagenz kommerziell durchgesetzt. Vorteilhaft bei der Verwendung von Essigsäureanhydrid ist die durchgehende Acetylierung bei Festholz, die gute Verfügbarkeit des Reagenzes in der Industrie, da es in großen Mengen hergestellt wird und zusätzlich schon unterhalb der Siedetemperatur eine relativ hohe Reaktivität besitzt.

Nachteilig bei der Verwendung von Essigsäureanhydrid als Acetylierungsreagenz ist jedoch das zwangsläufige Entstehen einer nicht benötigten stöchiometrischen Menge an Essigsäure und der anschließende technische Aufwand um die gebildete Essigsäure nach Abschluss der Acetylierung komplett aus dem Holz zu entfernen.

Die beschriebenen Nachteile existieren jedoch beispielsweise nicht bei der Acetylierung von Holz mittels dem hochreaktiven gasförmigen Keten als Acetylierungsreagenz.

Aus JP 2235705 ist ein Verfahren zur Acetylierung bekannt, bei dem getrocknetes Festholz (Dicke 15 mm) mittels Ketengas unter Druck (10 bar) oder mit einer Lösung von Ketengas in Aceton (12 bar) umgesetzt wird. Der erhöhte Druck in dieser Acetylierung ist notwendig, weil sonst nur dünne Holzschichten (einige mm) durchacetyliert werden könnten. Nachteilig an diesem Verfahren ist aber, dass Keten unter Druck leicht dunkelgefärbte polymere Produkte bildet.

Weiterhin ist ein sehr hoher technischer Aufwand nötig, um die Dichtigkeit des Drucksystems zu gewährleisten, da Keten sehr toxisch ist und damit ein sehr großes Sicherheitsrisiko bei Undichtigkeiten vorhanden ist.

Aus JP 435903 ist ein Verfahren zur Acetylierung von Holzfurnieren mittels Keten und Ketenlösungen bekannt. In den Ausführungsformen werden dabei die Acetylierung von dickeren Holzplatten mit 5 mm Stärke sowie die Acetylierung von Holzmehl mittels einer Lösung von Toluol und Keten bei Normaldruck beschrieben. Weiterhin wird die Acetylierung von sehr dünnen Holzfurnieren (0,1 mm Dicke) bei Normaldruck und einer Temperatur von 20°C mit Ketengas beschrieben.

Nachteilig bei der Acetylierung von Holzmehl mittels einem in einem Lösungsmittel gelösten Keten ist der zusätzlich nötige Aufwand für das Lösungsmittelrecycling und das vollständige Entfernen des Lösungsmittels aus dem Holzmehl.

Die Aufgabe der Erfindung war daher, ein Verfahren zur wirtschaftlichen Herstellung von acetylierten Lignocellulosen wie Holzspänen bzw. Holzmehl, Hemicellulosen wie Stroh, und Cellulosen wie Baumwollfasern mit verschiedenen Acetylierungsgraden und der Modifizierung bzw. Oberflächenmodifizierung von Regeneratcellulosen zur Herstellung von Composites zu finden, das ohne Lösungsmittel auskommt und damit die nachträgliche Abtrennung der Reaktionsprodukte und zusätzliche Reinigungsverfahren unnötig macht.

Gegenstand der Erfindung ist ein Verfahren zur Herstellung von acetylierten Naturprodukten, **dadurch gekennzeichnet, dass** ein Naturprodukt, enthaltend ein oder mehrere Stoffe aus der Gruppe der Cellulosen, Lignocellulosen, Hemicellulosen oder ein aus Naturprodukten hergestelltes Material aus der Gruppe der Regeneratcellulosen mit Ketengas umgesetzt wird.

Zur erfindungsgemäßen Acetylierung eignen sich besonders Cellulose und celluloseenthaltende Produkte, beispielsweise Hölzer jeglicher Art (z.B. Buche, Nadelhölzer, Eukalyptus, Pinie) in Form von Festholz oder Holz in zerkleinerter Form wie Holzspäne oder Holz in fasriger oder pulvriger Form. Außerdem kann das erfindungsgemäße Verfahren auch auf Holz in Form von Werkstücken oder Fertigerzeugnissen wie beispielsweise Fensterrahmen angewendet werden.

Weiterhin eignen sich besonders jegliche Form von Stroh (Weizen, Reis, Roggen), Fasern aus Baumwolle, Jute, Flachs (Leinen), Hanf und Sisal sowie Fasern aus Regeneratcellulosen wie beispielsweise Viskose, Cupro, Lyocell, Modal.

Besonders geeignet ist das Verfahren zur Acetylierung von Naturverbindungen enthaltend wechselnde Anteile der Stoffe Cellulose, Hemicellulose und Lignin, wie beispielsweise Holz.

Die erfindungsgemäß erhaltenen acetylierten Naturprodukte eignen sich besonders zur Verarbeitung in Composites. Dies können beispielsweise Verbundwerkstoffe aus Holzfasern oder Holzpartikeln in einer Kunststoffmatrix (meist Thermoplaste) sein. Diese werden auch Wood-Plastic-Composite (WPC) genannt. Die acetylierten Naturprodukte werden dabei in eine Kunststoffschmelze wie beispielsweise PE, PP oder PVC eingebracht und gleichmäßig verteilt. Nach dem Abkühlen wird das feste Composite erhalten, das beispielsweise mittels Spritzguss oder Extrusion in Formkörper überführt werden kann. Derartige Formkörper mit Naturprodukten werden als marktgängige Produkte beispielsweise als Fensterprofile, Stühle oder als Profilbodenbelag für Terrassen vertrieben.

Als besondere Ausführungsform können auch Composites direkt acetyliert werden. Dazu können natürlich vorkommende Composites oder auch technisch hergestellte Composites eingesetzt werden.

Die erfindungsgemäße Acetylierung kann diskontinuierlich oder kontinuierliche betrieben werden. Bevorzugt wird ein Druck von 0,1 bar bis 10 bar und eine Temperatur von 30 - 180°C. Besonders bevorzugt wird das Verfahren bei Normaldruck oder bei reduziertem Druck.

Wird das Verfahren batchweise ausgeführt, kann beispielsweise ein Reaktor mit geeignetem Mischsystem verwendet werden, bei dem das Ketengas über ein Bodenventil, ein Gaseinleitungsrohr oder über den Mischer (z.B. Begasungsrührer) eingeleitet wird. Das zu acetylierende Material (z.B. Holzspäne) wird in den Reaktor gefüllt und das zu acetylierende Material wird unter kontinuierlicher oder diskontinuierlicher Durchmischung auf 50-80°C erhitzt und anschließend Ketengas zugeführt.
Alternativ kann das Edukt auch in bereits vorgeheizter Form in den Reaktor eingebracht werden.

Während der Zufuhr des Ketengases wird Reaktionswärme frei, die über eine Innenschlange oder Mantelkühlung abgeführt wird, wobei eine Temperatur bis zu 150°C zu keiner Schädigung oder Verfärbung des zu acetylierenden Materials führt. Hohe Temperaturen sind bevorzugt, da die Acetylierungsreaktion dann besonders schnell verläuft und die Temperaturdifferenz zum Kühlmedium groß ist. Bei Temperaturen von größer als 150°C kommt es allmählich zu einer deutlich sichtbaren Verfärbung des Materials.

Die Reaktion mit Ketengas kann auch bei niedrigeren Temperaturen wie Raumtemperatur erfolgen, jedoch ist dies aufgrund der geringen Reaktionsgeschwindigkeit wirtschaftlich nicht sinnvoll.

Die Ketenzufuhrmenge kann während der Reaktion gleich bleiben oder mit der Zeit reduziert werden, um Verluste über das Abgas minimal zu halten. Zur Steuerung der Reaktion kann das Ketengas bei Bedarf auch mit einem Inertgas wie beispielsweise Stickstoff oder mit Edelgas oder Kohlendioxid gemischt eingesetzt werden.

Der Acetylierungsgrad wird über die zugeführte Menge an Keten geregelt. Sobald die für den erwünschten Acetylierungsgrad erforderliche Menge Keten zugeführt ist, wird die Zufuhr gestoppt und nach einer kurzen Nachreaktionszeit abgekühlt und vor der Entnahme des fertigen Produktes der Reaktor gegebenenfalls evakuiert, um Spuren von verbliebenem Ketengas zu entfernen.

Bei Holzspänen oder Holzmehl erhält man auf diese Weise Materialien mit einem Acetylierungsgrad (WPG% = weight percent gain) bis zu über 35%. Die Acetylierungsgrade bei der Oberflächenmodifizierung von Baumwoll- oder Materialien aus Regeneratcellulosen liegen bei einer WPG bis zu 10%.

In einer besonderen Ausführungsform des erfindungsgemäßen Verfahrens kann auch eine Kaskade von Reaktoren verwendet werden, bei denen das ketenhaltige Abgas eines Reaktors in einen anderen Reaktor eingeleitet wird, der mit frischen bzw. nur teilacetyliertem Material gefüllt ist, um restliches Keten im Abgas vollständig auszunutzen.

Das erfindungsgemäße Verfahren kann auch mittels einer kontinuierlichen Zuführung des zu acetylierenden Materials sowie einer kontinuierlichen Entnahme des acetylierten Materials erfolgen.

Bei der erfindungsgemäßen Acetylierung von Fasern, Gewebe oder Composites kann auch während der Reaktion zur Steuerung der Reaktionstemperatur und der Acetylierungsgeschwindigkeit, gegebenfalls ein Inertgas zugeführt werden. Geeignete Intertgase sind beispielsweise Stickstoff, Edelgase, Kohlendioxid oder auch Mischungen davon.

Besonders bevorzugt ist eine kontinuierliche Verfahrensweise, bei der beispielsweise ein Moving-Bed-Reactor, ein Wirbelschichtreaktor oder ein Drehrohreaktor (wie in EP 0135078 beschrieben) mit und ohne Wandelemente bzw. Einbauten eingesetzt wird. Die Bedingungen können dabei so gewählt werden, dass eine konstante Temperatur während der Acetylierung eingestellt ist und ein konstanter Austrag des acetylierten Materials erfolgt. Die dabei freigesetzte Wärmemenge wird über eine geeignete Kühlung dem System entzogen und kann zudem zur Trocknung des zugeführten Materials verwendet werden, so dass der Energieverbrauch des Gesamtprozesses minimal ist. Bevorzugt wird ein Edukt mit geringer Restfeuchte eingesetzt. Dies kann beispielsweise durch geeignete Trocknungsverfahren vorab erhalten werden. Material mit höherer Restfeuchte kann zwar auch eingesetzt werden, hat allerdings den Nachteil, dass bedingt durch die Bildung von Essigsäure ein gewisses Zusammenkleben des acetylierten Produktes nicht verhindert werden kann und zudem die Essigsäure aus dem acetylierten Material am Ende der Reaktion entfernt werden muss.

Die so hergestellten acetylierten nachwachsenden Rohstoffe können beispielsweise zur Herstellung von Composite-Materialien zusammen mit Polymeren eingesetzt werden, welche sich durch hohe Beständigkeit auch unter feuchten Bedingungen oder häufigen Witterungswechseln auszeichnen. Weiterhin können sie auch vielfältig als Füllstoffe eingesetzt werden.

Ebenso ermöglicht die Oberflächenmodifizierung von Fasern, Geweben usw. eine permanente Hydrophobierung sowie eine Änderung der mechanischen Eigenschaften. Als Naturfasern können beispielsweise Holz-, Stroh-, Flachs-, Hanf- und Sisal-Fasern erfindungsgemäß acetyliert werden.

Anhand der folgenden Beispiele soll die Erfindung näher erläutert werden.

### Beispiel 1:

In einen 2 l Dreihalskolben mit Gaseinleitungsrohr, Kühler, Thermometer und KPG-Rührer mit Teflonblatt wurden 375 g getrocknete Holzspäne Lignocel BK 40/90 (Firma Rettenmaier & Söhne) mit einer Restfeuchte von 0,82% gegeben, mit einem Heizbad auf 80°C aufgeheizt und 70 min. Ketengas mit 100 g/h unter Rühren eingeleitet. Während des Einleitens stieg die Temperatur an und wurde durch Kühlen unter 130°C gehalten. Dann wurde kurz evakuiert und die Späne im Vakuum bei 110°C über Nacht getrocknet. Erhalten wurden 441,9 g farblich kaum veränderte acetylierte Holzspäne mit einer Restfeuchte von 0,8% und einem WPG von 17,9%.

### Beispiel 2:

Es wird wie in Beispiel 1 vorgegangen - abweichend wurde 30 min. Ketengas mit 100 g/h eingeleitet, dann 20 min. mit 75 g/h und 20 min. mit 50 g/h. Erhalten werden 439,2 g farblich unveränderte Holzspäne mit einer Restfeuchte von 0,7% und einem WPG von 17,3%.

### Beispiel 3:

Es wird wie in Beispiel 1 vorgegangen - abweichend wurde auf 40°C vorgeheizt und dann Ketengas mit 50 g/h 100 min. eingeleitet. Die Temperatur wurde dann durch die abgegebene Reaktionswärme bis auf die max. Temperatur von 80°C erhöht und dort gehalten. Erhalten wurden 445,7 g farblich unveränderte Holzspäne mit einer Restfeuchte von 0,6% und einem WPG von 19,1%.

### Beispiel 4:

In einen 250 ml Dreihalskolben mit Gaseinleitungsrohr, Kühler, Thermometer und KPG-Rührer mit Glasflügelrührer wurden 30 g getrocknete Holzspäne Lignocel BK 40/90 mit einer Restfeuchte von 0,82% gegeben und bei Raumtemperatur 20 min. Ketengas mit 20 g/h unter Rühren eingeleitet. Während des Einleitens stieg die Temperatur auf 90°C an. Dann wurde kurz evakuiert und die Späne im Vakuum bei 110°C über Nacht getrocknet. Erhalten wurden 32,6 g farblich unveränderte acetylierte Holzspäne mit einer Restfeuchte von 0,6% und einem WPG von 8,9%.

### Beispiel 5:

In einen 250 ml Dreihalskolben mit Gaseinleitungsrohr, Kühler, Thermometer und KPG-Rührer mit Glasflügelrührer wurden 30 g getrocknete Holzspäne Lignocel BK 40/90 mit einer Restfeuchte von 0,82% gegeben und bei Raumtemperatur 60 min. Ketengas mit 20 g/h unter Rühren eingeleitet. Während des Einleitens stieg die Temperatur auf max. 117°C an. Dann wurde kurz evakuiert und die Späne im Vakuum bei 110°C über Nacht getrocknet. Erhalten wurden 39,2 g farblich leicht dunklere acetylierte Holzspäne mit einer Restfeuchte von 0,5% und einem WPG von 31,0%.

### Beispiel 6:

In einen 500 ml Dreihalskolben mit Gaseinleitungsrohr, Kühler, Thermometer und KPG-Rührer mit Glasflügelrührer wurden 20 g getrocknetes Weizenstroh mit einer Restfeuchte von 0,33% gegeben und beginnend bei 62°C 20 min. Ketengas mit 50 g/h unter Rühren eingeleitet. Während des Einleitens stieg die Temperatur auf max. 120°C an. Dann wurde kurz evakuiert und die Späne im Vakuum bei 110°C über Nacht getrocknet. Erhalten wurde 27,82 g farblich fast nicht verändertes acetyliertes Stroh mit einer Restfeuchte von 0,4% und einem WPG von 39,0%.

### Beispiel 7:

In einen 1000 ml Dreihalskolben mit Gaseinleitungsrohr, Kühler und Thermometer wurden 10 g Baumwollfasern mit einer Restfeuchte von 6,1% gegeben und beginnend bei 55°C 30 min. Ketengas mit 20 g/h eingeleitet. Während des Einleitens stieg die Temperatur auf max. 72°C an. Dann wurde kurz evakuiert und die Fasern im Vakuum bei 110°C über Nacht getrocknet. Erhalten wurden 10,6 g farblich unveränderte acetylierte Baumwollfasern mit einer Restfeuchte von 4,1% und einem WPG von 8,3%.

### Beispiel 8:

In einen 1000 ml Dreihalskolben mit Gaseinleitungsrohr, Kühler und Thermometer wurden 10 g Viskosefasern mit einer Restfeuchte von 9,5% gegeben und beginnend bei 58°C 30 min. Ketengas mit 20 g/h eingeleitet. Während des Einleitens stieg die Temperatur auf max. 70°C an. Dann wurde kurz evakuiert und die Fasern im Vakuum bei 110°C über Nacht getrocknet. Erhalten wurden 9,8 g farblich unveränderte acetylierte Viskosefasern mit einer Restfeuchte von 3,5% und einem WPG von 4,5%.

### Beispiel 9:

In einen 1000 ml Dreihalskolben mit Gaseinleitungsrohr, Kühler, Thermometer und KPG-Rührer mit Teflonblattrührer wurden 20 g Sisalfasern (ca. 15-20 mm Länge) mit einer Restfeuchte von 2,3% gegeben und beginnend bei 60°C 30 min. Ketengas mit 50 g/h unter Rühren eingeleitet. Während des Einleitens stieg die Temperatur auf max. 75°C an. Dann wurde kurz evakuiert und die Fasern im Vakuum bei 110°C über Nacht getrocknet. Erhalten wurden 20,9 g farblich nur leicht veränderte acetylierte Sisalfasern mit einer Restfeuchte von 1,5% und einem WPG von 5,4%.

### Beispiel 10:

In einen Labordrehrohrreaktor wurden kontinuierlich 100 g/h Holzspäne (Lignocel BK 40/90 getrocknet) sowie 27 g/h Ketengas eingebracht und die acetylierten Holzspäne kontinuierlich entnommen, wobei das Ketengas im Gegenstrom zu den Holzpartikeln fließt und die Temperatur der Späne durch Heizen/Kühlen bei 115-125°C gehalten wurde. Die durchschnittliche Verweilzeit betrug 30 min.. Nach 2 h bei konstanten Verhältnissen wurden 235,1 g farblich unveränderte acetylierte Holzspäne mit einem WPG von 17,9% erhalten.

### Beispiel 11:

In einen Laborwirbelschichtreaktor wurden kontinuierlich 200 g/h Holzspäne (Lignocel BK 40/90 getrocknet) sowie 40 g/h Ketengas zusammen mit 500 ml/min. auf 110 °C erwärmtes Stickstoffgas eingebracht und acetylierte Holzspäne kontinuierlich entnommen. Die durchschnittliche Verweilzeit betrug 30 min. Die acetylierten Holzspäne sind farblich unverändert und das WPG beträgt 16,2%.

### Vergleichsbeispiel 1:

Ein Weiß-Eschenbrett mit einer Dicke von 15 mm, Breite von 150 mm sowie Länge von 300 mm wird in einer Vakuumtrocknungsanlage bei 100°C 5 Stunden lang getrocknet. Anschließend wird Ketengas eingeleitet, wobei der Druck bis auf 10 Atmosphären eingestellt und bei 100°C 2 Stunden lang umgesetzt wird. Anschließend wird das überschüssige Ketengas durch Einleiten in Wasser in Essigsäure überführt. Die Gewichtszunahme betrug 20%.

### Vergleichsbeispiel 2:

100 g Lauan-Holzmehl werden in ein druckbeständiges 51-Gefäß aus Glas gegeben und im Vakuum bis auf 100 mmHg entgast. Anschließend wird Toluol eingefüllt, Normaldruck durch Lufteinleitung wieder hergestellt und Ketengas bei 20 ml/min 60 Minuten lang zur Acetylierung zugeführt.

Nach Beendigung der Reaktion wird das Toluol entfernt und das Lauan-Holzmehl isoliert. Die Gewichtzunahme des Holzes durch die Acetylierung beträgt 18%.

## Patentansprüche

1. Verfahren zur Herstellung von acetylierten Naturprodukten,
**dadurch gekennzeichnet, dass** ein Naturprodukt, enthaltend ein oder mehrere Stoffe aus der Gruppe der Cellulosen, Lignocellulosen, Hemicellulosen oder ein aus Naturprodukten hergestelltes Material aus der Gruppe der Regeneratcellulosen mit Ketengas umgesetzt wird.

2. Verfahren nach Anspruch 1, **dadurch gekennzeichnet, dass** Holz in Form von Festholz, oder in zerkleinerter Form als Späne, Fasern, Pulver eingesetzt acetyliert wird.

3. Verfahren nach Anspruch 1, **dadurch gekennzeichnet, dass** Stroh aus Weizen, Reis oder Roggen, Fasern aus Baumwolle, Jute, Flachs (Leinen), Hanf und Sisal sowie Fasern aus Regeneratcellulosen acetyliert werden.

4. Verfahren nach Anspruch 1 bis 3, **dadurch gekennzeichnet, dass** Composites acetyliert werden.

5. Verfahren nach Anspruch 1 bis 4, **dadurch gekennzeichnet, dass** die Acetylierung diskontinuierlich oder kontinuierlich betrieben wird.

6. Verfahren nach Anspruch 1 bis 5, **dadurch gekennzeichnet, dass** die Reaktion mit reinem Ketengas oder einer Keten/Inertgasmischung durchgeführt wird.

7. Verfahren nach Anspruch 1 bis 5, **dadurch gekennzeichnet, dass** die Acetylierung bei einem Druck von 0,1 bar bis 10 bar und einer Temperatur von 30 - 180°C stattfindet.

8. Verfahren nach Anspruch 1 bis 7, **dadurch gekennzeichnet, dass** der Acetylierungsgrad über die zugeführte Menge an Keten geregelt wird.

9. Verfahren nach Anspruch 1 bis 8, **dadurch gekennzeichnet, dass** das Edukt vor der Acetylierung einem Trocknungsverfahren unterzogen wird.
